# EUROPÄISCHE PATENTSCHRIFT

(11) **EP 0 494 372 B1**
(45) Veröffentlichungstag und Bekanntmachung des Hinweises auf die Patenterteilung: **28.05.1997**
(21) Anmeldenummer: 91120545.8
(22) Anmeldetag: 29.11.1991
(51) Int. Cl.: H04L 12/413

(54) **Verfahren zur Zugriffssteuerung für an ein Bus-System angeschlossene Stationen in Kommunikations-Vermittlungsanlagen**
Method of access control for stations connected to a bus system in a communications network
Procédé d'asservissement d'accès pour stations raccordées à un système de bus dans un réseau de communication

(30) Priorität: 31.12.1990 DE 4042303
(43) Veröffentlichungstag der Anmeldung: 15.07.1992
(73) Patentinhaber: ROBERT BOSCH GMBH, 70442 Stuttgart (DE)
(72) Erfinder: Sauer, Klaus, Dr., W-6000 Frankfurt am Main 90 (DE); Schmidt, Werner, Dipl.-Ing., W-8754 Grossostheim (DE); Pohlit, Reinhard, Dipl.-Ing., W-6000 Frankfurt/M. 71 (DE)

(56) Entgegenhaltungen:
- EP-A- 0 110 015
- EP-A- 0 130 000
- EP-A- 0 388 574
- DE-A- 3 933 361

## Beschreibung

Die Erfindung betrifft ein Verfahren zur Zugriffssteuerung für an ein Bus-System angeschlossene Stationen in Kommunikations-Vermittlungsanlagen nach dem Oberbegriff des Patentanspruchs 1.

Aus der europäischen Offenlegungsschrift 0 388 574 A1 ist ein Verfahren und ein Gerät für verteilte Warteschlangen bei einem Vielfachzugriff in einem Kommunikationssystem bekannt. Mit diesem Verfahren soll vermieden werden, daß beim Zugriff zum Bus-System unfaire Bedingungen zwischen den einzelnen Stationen entstehen können. Den Stationen werden gleichen Chancen beim Zugriff dadurch gegeben, daß ihnen eine individuelle Verzögerung zugeteilt wird. Damit sollen Laufzeitunterschiede, die für Zeitschlitze und Zugriffsanfragen von den verschiedenen Stationen bestehen, vermieden werden.

Jede Station hat einen Warteschlangenspeicher, worin alle Zugriffswünsche sequentiell gespeichert werden. Dabei wird unterschieden zwischen den eigenen Zugriffswünschen und denen von anderen Stationen. Der Eintrag eines eigenen Zugriffswunsches in den Warteschlagenspeicher kann nur erfolgen, wenn auf dem Bus ein freier Zeitschlitz festgestellt wird. Das Auslesen der eigenen Zugriffswünsche und damit der Zugriff auf den Bus erfolgt dann, wenn ein zugeordneter Zähler auf Null gestellt wurde und ein freier Zeitschlitz vorliegt. Die Warteschlangenspeicher haben also einen jeweils individuellen Inhalt, wobei eine Verknüpfung stattfindet mit dem Inhalt von auf dem Bus zirkulierenden Informationen.

Außerdem ist für das Erreichen der zuvor erwähnten Chancengleichheit ein Verzögerungselement innerhalb einer jeden Station quasi vor dem jeweiligen Warteschlangenspeicher geschaltet.

Da bei dem in der EP 0 388 574 A1 beschriebenen Verfahren das Festlegen der Zugriffsreihenfolge nicht unabhängig von der Informationssendung stattfindet, dauert es relativ lange, bis ein Zugriffswunsch erledigt ist. Außerdem ist die dafür in einer jeden Station erforderlichen Logik relativ aufwendig.

In der DE-OS 33 16 492 ist eine Schaltungsanordnung für den Teilnehmeranschluß in einem Dienste integrierenden Digitalnetz (ISDN) beschrieben. Dort ist in einem auf Seite 4 beginnenden Absatz beschrieben, auf welche Weise die an einem S-Bus angeschlossenen Terminals einen Zugriff auf den D-Kanal erhalten. Demnach erhält ein Endgerät dann den Zugriff zum D-Kanal, wenn bei einem Bit-Vergleich eine Übereinstimmung mit der ausgesendeten Information festgestellt wird. Auch hierbei gilt der Grundsatz, daß ein Endgerät seinen Zugriffsversuch abbrechen muß, wenn bei einem Bit-Vergleich ein Unterschied festgestellt wird.

Ausgehend vom vorgenannten Stand der Technik besteht die Aufgabe der Erfindung darin, ein Verfahren anzugeben, wobei der Zugriffswettbewerb unabhängig von der Informationsaussendung und gleichzeitig mit dieser stattfinden kann. Dabei soll vor dem Beginn der Aussendung von Information bereits feststehen, welche Station senden darf.

Diese Aufgabe wird mit einer Merkmalskombination gelöst, wie sie im Patentanspruch 1 angegeben ist.

Damit wird in vorteilhafter Weise erreicht, daß beim Zugriffswunsch von mehreren Stationen eine Reihenfolge gebildet wird, so daß bei jedem Beginn der Aussendung von Information festgelegt ist, von welcher Station aus gesendet wird. Das Aussenden von Information ist unabhängig vom Zugriffswettbewerb, welcher gleichzeitig mit der Informationssendung stattfinden kann.

In den Unteransprüchen sind vorteilhafte Weiterbildungen der Erfindung angegeben, womit u. a. erreicht wird, daß auch diejenigen Stationen einen Zugriff erhalten, welche aufgrund ihrer Adresse mit ungünstiger Bit-Konfiguration eine geringere Zugriffswahrscheinlichkeit haben.

Ein Ausführungsbeispiel der Erfindung wird nachfolgend anhand von Zeichnungen näher erläutert.
Es zeigt
- Fig. 1: das Prinzipschaltbild eines gefalteten Bus-Systems mit mehreren dezentralen Stationen und einer Bus-Steuerung,
- Fig. 2: das Blockschaltbild des für die Zugriffssteuerung zuständigen Teils einer Station.

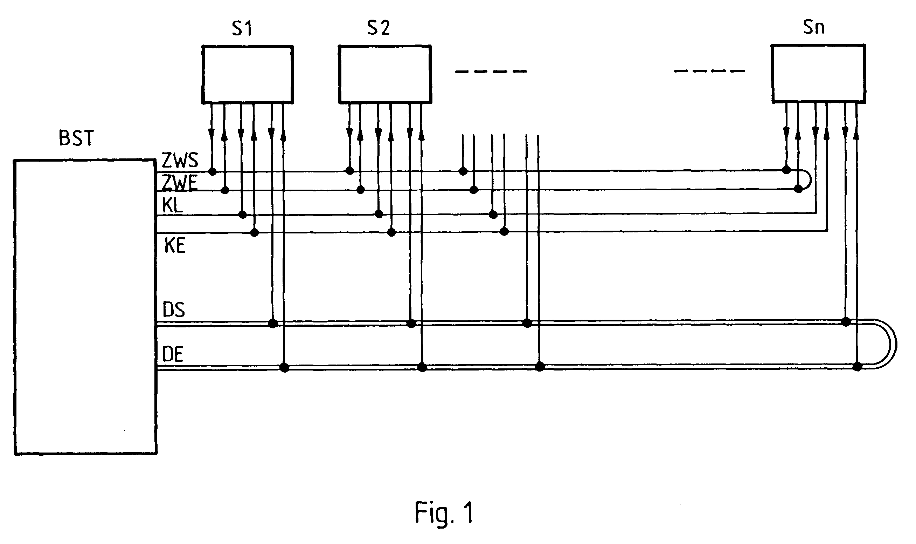

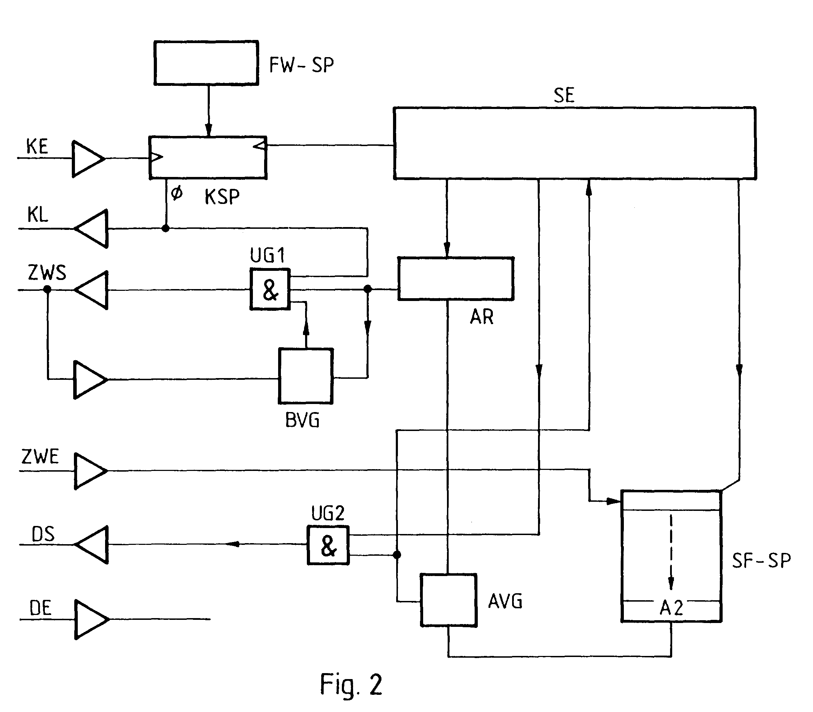

In der Fig. 1 ist dargestellt, wie von einer Bus-Steuerung BST ausgehend eine Daten-Sendeleitung DS an alle Stationen S1 - Sn herangeführt ist, die dann als Daten-Empfangsleitungen DE zur Bus-Steuerung BST zurückgeführt ist. Die Datensender aller Stationen S1 - Sn sind mit der Daten-Sendeleitung DS verbunden, und die Datenempfänger der einzelnen Stationen S1 - Sn sind an die Daten-Empfangsleitung DE angeschlossen. Unabhängig davon ist eine Zugriffswettbewerb-Sendeleitung ZWS und eine Zugriffswettbewerb-Empfangsleitung ZWE vorhanden, wobei diese Leitungen ZWS und ZWE vom Prinzip her ebenfalls wie ein gefalteter Bus betrieben werden. Außerdem ist eine Kreditleitung KL vorgesehen, welche als verdrahtete ODER-Verbindung geschaltet ist und angibt, ob alle Kreditspeicher KSP, Fig. 2, leer sind. Über die außerdem vorgesehene Kredit-Empfangsleitung KE wird von der Bus-Steuerung BST der Befehl an die Stationen S1 - Sn gegeben, den Kreditspeicher KSP wieder zu laden. Die Funktion des Kreditspeichers KSP wird nachfolgend anhand der Fig. 2 beschrieben.

In der Fig. 2 ist eine Steuereinrichtung SE dargestellt, welche u. a. mit einem Adressregister AR und einem Sendefolgespeicher SF-SP bei der Ermittlung der Zugriffsberechtigung zusammenarbeitet. Wenn in nicht dargestellter Weise von einer Station, z. B. S2 erkannt wird, daß ein Sendewunsch vorliegt, so wird die im Adressregister AR eingespeicherte Adresse der betreffenden Station über das UND-Gatter UG1 auf die Zugriffswettbewerb-Sendeleitung ZWS gegeben. Die Adresse der betreffenden Station, z. B. S2, wird dabei bitseriell ausgegeben. Wenn zufällig eine andere Station, z. B. S1, sich gleichzeitig ebenfalls um einen Zugriff bewirbt, so kann dies durch einen Bit-Vergleicher BVG erkannt werden. Wenn bei der Aussendung der Adresse ein Unterschied zwischen dem gesendeten Bit und einem auf der Zugriffswettbewerb-Sendeleitung ZWS bereits befindlichen Bit festgestellt wird, so wird das Senden der Adresse sofort abgebrochen, indem das UND-Gatter UG1 gesperrt wird. Der Zugriffswunsch bleibt dann erhalten, und es wird ein neuer Versuch gestartet, wenn der für den Zugriffswettbewerb vorbestimmte Zeitrahmen wieder erscheint.

Wenn es einer Station, z. B. S2, gelungen ist, ihre vollständige Adresse auf der Zugriffswettbewerb-Sendeleitung ZWS auszusenden, so gelangt diese über die Zugriffswettbewerb-Empfangsleitung ZWE in den Sendefolgenspeicher SF-SP. Diese Adresse wird dann auch in allen anderen Stationen S1 - Sn in den jeweiligen Sendefolgespeichern SF-SP aufgenommen. Da alle Sendefolgenspeicher SF-SP als sog. FIFO-Speicher ausgebildet sind, gelangt jeweils die zuerst eingespeicherte Adresse, z. B. A2 auch zuerst wieder an den Speicherausgang. Auf diese Weise entsteht nach mehreren griffswettbewerbzyklen in allen Sendefolgenspeichern SF-SP eine Adressfolge, die angibt, in welcher Reihenfolge die einzelnen Stationen S1 - Sn senden dürfen. Wenn der durch ein Taktschema bestimmte Zeitpunkt für das Aussenden von Information gekommen ist, so wird in allen Sendefolgenspeichern SF-SP die jeweils zuerst eingespeicherte Adresse, im Beispiel A2, ausgelesen und einem Adressvergleicher AVG angeboten. Wenn dieser Adressvergleicher AVG feststellt, daß die aus dem Sendefolgenspeicher SF-SP ausgelesene Adresse mit der im Adressregister AR vorhandenen eigenen Adresse der betreffenden Station, z. B. S2 übereinstimmt, dann wird ein UND-Gatter UG2 freigegeben, so daß in der Steuereinrichtung SE oder an anderer Stelle vorhandene Information auf die Datensendeleitung DS gelangen kann. Somit kann also nur diejenige Station, im Beispiel S2, Informationen absenden, die eine aus dem Sendefolgenspeicher SF-SP ausgelesene Adresse als ihre eigene erkennt.

Neben der Datensendeleitung DS ist eine Datenempfangsleitung DE vorgesehen, welche mit allen Stationen S1 - Sn verbunden ist, wie dies in Fig. 1 dargestellt ist. Da diese Datenempfangsleitung DE bei der Ermittlung der Zugriffsberechtigung keine Rolle spielt, wird nicht näher beschrieben, wie die empfangenen Daten verarbeitet werden.

Beim seriellen Aussenden der Adresse einer Station S1 - Sn zur Ermittlung der Zugriffsberechtigung findet jeweils eine logische Addition der einzelnen Bits statt, wenn mehr als eine der Stationen S1 - Sn sich um den Zugriff bewerben. Deshalb ist die Wahrscheinlichkeit, daß eine der Stationen S1 - Sn den Zugriff erhält, abhängig von der Bitstruktur ihrer Adresse. Somit kann es vorkommen, daß der Zugriffswunsch einer Station S1 - Sn seltener erfüllt wird, wenn die Adresse eine ungünstige Bitstruktur hat, die von der Adresse anderer Stationen S1 - Sn überschrieben werden kann.

Um auch diesen Stationen mit ungünstiger Bitstruktur in der Adresse einen fairen Zugriffswettbewerb zu ermöglichen, sind zusätzlich in allen Stationen Kreditspeicher KSP vorgesehen. Diese Kreditspeicher KSP werden in allen Stationen S1 - Sn durch einen von der Bus-Steuerung BST über die Kredit-Empfangsleitung KE abgegebenen Befehl mit einem individuellen Festwert geladen. Dieser Festwert kann in einem programmierbaren Festwertspeicher FW-SP, der einer jeden Station S1 - Sn zugeordnet ist, abgelegt sein. Bei der Bemessung dieses Festwertes kann die Zugriffshäufigkeit und die Adress-Konfiguration der jeweiligen Station S1 - Sn berücksichtigt werden. Nur dann, wenn der im Kreditspeicher KSP abgelegte Wert größer ist als Null, kann eine Station S1 - Sn am Zugriffswettbewerb teilnehmen. Immer dann, wenn eine Station den Zugriffswettbewerb gewonnen hat, oder wenn die Station mit dem Senden von Information beginnt, wird der Inhalt des Kreditspeichers KSP um den Wert Eins vermindert. Wenn auf diese Weise der Kreditspeicher KSP den Wert Null erreicht, wird die betreffende Station S1 - Sn vom Zugriffswettbewerb ausgeschlossen. Somit können nur noch Stationen S1 - Sn am Zugriffswettbewerb teilnehmen, deren Kreditspeicher KSP noch einen Inhalt aufweist. Somit können beim Vorliegen von vielen Zugriffswünschen auch solche Stationen berücksichtigt werden, deren Adresse eine ungünstige Konstellation aufweist.

Das Laden der Kreditspeicher KSP mit den individuellen Festwerten wird von der Bus-Steuerung BST erst dann veranlaßt, wenn kein Sendewunsch mehr vorliegt, oder wenn alle Kreditspeicher KSP leer sind. Sollte sich dabei herausstellen, daß im Extremfall bei einer Station S1 - Sn die Sendewünsche nicht ausreichend berücksichtigt werden, so kann ohne weiteres der Festwert dieser Station erhöht werden, sodaß deren Chance größer wird, die Zugriffsberechtigung zu erhalten.

## Patentansprüche

1. Verfahren zur Zugriffssteuerung für an ein Bus-System angeschlossene Stationen in Kommunikations-Vermittlungsanlagen mit Sende- und Empfangsleitungen, wobei eine oder mehrere sendewillige Stationen ihre Adressen auf einer dazu bestimmten Leitung senden, und nur diejenige Station den Zugriff zu dem Bus-System erhält, deren Adreßsignale sich gegenüber Adreßsignalen von anderen sendewilligen Stationen durchgesetzt haben,
**dadurch gekennzeichnet**,
daß für alle sendebereiten Stationen (S1 bis Sn) Sendewarteschlangen gebildet werden,
daß zu diesem Zweck in jeder Station (S1 bis Sn) ein Sendefolgenspeicher (SF-SP) vorgesehen ist, worin nach dem Abschluß eines jeden Zugriffswettbewerbszyklus nacheinander jeweils nur die Adresse (z. B. A2) der für eine nachfolgende Datenübertragung zugriffsberechtigten Station (z. B. S2) abgelegt wird,
daß alle Sendefolgenspeicher (SF-SP) zu einem von einem Taktschema bestimmten Zeitpunkt vor dem Beginn einer Datenübertragung ausgelesen werden, so daß die jeweils zuerst eingetragene Adresse (z. B. A2) in allen Stationen (S1 bis Sn) erscheint und nur an einer der Stationen (z. B. S2) mit Hilfe eines Adreßvergleichers (AVG) als ihre eigene erkannt werden kann,
und daß beim Erkennen der eigenen Adresse (A2) die betreffende Station (S2) sendeberechtigt wird und mit dem Senden der Daten beginnt.

2. Verfahren nach Anspruch 1,
dadurch gekennzeichnet,
daß die Adresse (z. B. A2), die jeweils in alle Sendefolgenspeicher (SF-SP) einzutragen ist, auf der gemeinsamen Zugriffsempfangsleitung (ZWE) zur Verfügung steht.

3. Verfahren nach Anspruch 1,
dadurch gekennzeichnet,
daß die Sendefolgenspeicher (SF-SP) als FIFO-Speicher ausgebildet sind.

4. Verfahren nach Anspruch 1,
dadurch gekennzeichnet,
daß während der Informationssendung einer Station (S1 - Sn) ein neuer Zugriffswettbewerbzyklus stattfinden kann.

5. Verfahren nach Anspruch 1,
dadurch gekennzeichnet,
daß in den Stationen (S1 - Sn) zusätzliche Kreditspeicher ( KSP) vorgesehen sind, die jeweils mit einem individuellen Festwert geladen werden,
daß dieser Wert bei jeder Beteiligung am Zugriffswettbewerb um den Wert 1 vermindert wird, und daß die Teilnahme am Zugriffswettbewerb einer Station (S1 - Sn) verhindert wird, wenn der zugehörige Kreditspeicher (KSP) leer ist.

6. Verfahren nach Anspruch 5,
dadurch gekennzeichnet,
daß die Festwerte in die Kreditspeicher (KSP) erst dann wieder eingetragen werden, wenn kein Sendewunsch mehr vorliegt, oder wenn alle Kreditspeicher leer sind.

## Claims

1. Method of access control for stations connected to a bus system in communication exchanges having sending and receiving lines, one or more stations wanting to send sending their addresses to a line intended for the purpose, and only that station whose address signals have succeeded in getting through in competition with address signals of other stations wanting to send gaining access to the bus system, characterized in that sending queues are formed for all the stations (S1 to Sn) ready to send, in that for this purpose there is provided in each station (S1 to Sn) a sending sequence memory (SF-SP), in which there is successively stored after the completion of each access competition cycle in each case only the address (for example A2) of the station (for example S2) with access authorization for a subsequent data transmission, in that all the sending sequence memories (SF-SP) are read out at a point in time before the beginning of a data transmission, determined by a clocking scheme, so that the respectively first entered address (for example A2) appears in all the stations (S1 to Sn) and can be detected as its own only at one of the stations (for example S2) with the aid of an address comparator (AVG), and in that, when it detects its own address (A2), the relevant station (S2) is authorized to send and begins the sending of the data.

2. Method according to Claim 1, characterized in that the address (for example A2) which is respectively to be entered in all the sending sequence memories (SF-SP) is available on the common access receiving line (ZWE).

3. Method according to Claim 1, characterized in that the sending sequence memories (SF-SP) are designed as FIFO memories.

4. Method according to Claim 1, characterized in that during the sending of information by a station (S1-Sn) a new access competition cycle can take place.

5. Method according to Claim 1, characterized in that in the stations (S1 - Sn) there are provided additional credit memories (KSP), which are respectively loaded with an individual fixed value, in that this value is reduced by the value 1 with each involvement in the access competition, and in that participation by a station (S1 - Sn) in the access competition is prevented if the associated credit memory (KSP) is empty.

6. Method according to Claim 5, characterized in that the fixed values are entered again in the credit memories (KSP) only when there is no longer any request to send, or when all the credit memories are empty.

## Revendications

1. Procédé de commande d'accès pour des stations reliées à un système de bus dans un réseau de communication et de transmission comprenant des lignes d'émission et de réception, une ou plusieurs stations souhaitant émettre envoyant leur adresse à une ligne destinée à cet effet, et seule la station dont les signaux d'adresse se sont imposés par rapport aux signaux d'adresse d'autres stations souhaitant émettre, reçoit l'accès au système de bus,
caractérisé en ce que
pour toutes les stations prêtes à émettre (S1-Sn) on forme des files d'attente d'émission,
- pour cela il est prévu, dans chaque station (S1-Sn), une mémoire de suite d'émission (SF-SP) et, à la fin de chaque cycle de concours d'accès, successivement seule l'adresse (par exemple A2) de la station (par exemple S2) autorisée à l'accès suivante, pour la transmission des données, est enregistrée,
- toutes les mémoires de suite d'émission (SF-SP) sont lues à un instant défini par un schéma d'horloge avant le début d'une transmission de données, pour que l'adresse enregistrée chaque fois en premier lieu (par exemple A2) dans toutes les stations (S1-Sn) apparaisse et ne puisse être retenue que par l'une des stations (par exemple S2) à l'aide d'un comparateur d'adresses (AVG), comme étant son adresse propre,
et, en cas de reconnaissance de sa propre adresse (A2), la station concernée (S2) est autorisée à émettre et commence alors l'émission des données.

2. Procédé selon la revendication 1,
caractérisé en ce que
l'adresse, par exemple (A2), qui doit être enregistrée chaque fois dans toutes les mémoires de suite d'émission (SF-SP) est disponible sur la ligne de réception d'accès commune (ZWE).

3. Procédé selon la revendication 1,
caractérisé en ce que
les mémoires de suite d'émission (SF-SP) sont des mémoires FIFO.

4. Procédé selon la revendication 1,
caractérisé en ce que
pendant l'émission d'information par une station (S1-Sn), il s'effectue un nouveau cycle de concours d'accès.

5. Procédé selon la revendication 1,
caractérisé en ce que
les stations (S1-Sn) comportent en outre des mémoires de crédit (KSP) chargées chaque fois d'une valeur fixe individuelle,
- à chaque participation au concours d'accès, cette valeur est diminuée d'une unité et la participation au concours d'accès est interdite pour une station (S1-Sn) si sa mémoire de crédit (KSP) correspondante est vide.

6. Procédé selon la revendication 5,
caractérisé en ce que
les valeurs fixes sont enregistrées de nouveau dans les mémoires de crédit (KSP) seulement lorsqu'il n'y a plus de souhait d'émission ou lorsque toutes les mémoires de crédit sont vides.
